**Europäisches Patentamt**

**European Patent Office**

**Office européen des brevets**

(19)

(11) Veröffentlichungsnummer: **0 475 060 B1**

(12) **EUROPÄISCHE PATENTSCHRIFT**

(45) Veröffentlichungstag der Patentschrift: **30.11.94**

(51) Int. Cl.5: **G01M 1/16**, G01M 1/02

(21) Anmeldenummer: **91113005.2**

(22) Anmeldetag: **02.08.91**

(54) **Verfahren und Vorrichtung zum selbsttätigen Erkennen von Zwangskräften bei auszuwuchtenden Rotoren in kraftmessenden Auswuchtmaschinen.**

(30) Priorität: **10.09.90 DE 4028657**

(43) Veröffentlichungstag der Anmeldung:
**18.03.92 Patentblatt 92/12**

(45) Bekanntmachung des Hinweises auf die
Patenterteilung:
**30.11.94 Patentblatt 94/48**

(84) Benannte Vertragsstaaten:
**DE FR GB**

(56) Entgegenhaltungen:
**EP-A- 0 091 496**
**EP-A- 0 355 486**
**DD-A- 213 054**
**US-A- 4 338 818**

**PATENT ABSTRACTS OF JAPAN, Band 8, Nr.**
**153 (P-287)(1590), 17. Juli 1984; & JP-A-**
**59050332**

**PATENT ABSTRACTS OF JAPAN, Band 10,**
**Nr. 260 (P-494)(2316), 5. September 1986; &**
**JP-A-61086628**

**Federn Auswuchttechnik 1, Berlin 1977, Sei-**
**ten 281,282**

ISO 108

(73) Patentinhaber: **CARL SCHENCK AG**
**Postfach 4018**
**D-64273 Darmstadt (DE)**

(72) Erfinder: **Trommer, Wolfgang, Dr.**
**Alkmaarstrasse 34**
**W-6100 Darmstadt (DE)**
Erfinder: **Schminke, Karl-Heinz**
**Crumstädter Strasse 39**
**W-6102 Pfungstadt (DE)**

## Beschreibung

Die Erfindung betrifft Verfahren und eine Einrichtung zum selbsttätigen Erkennen von Zwangskräften beim Auswuchten von Rotoren in kraftmessenden Auswuchtmaschinen.

Beim Auswuchten von Rotoren auf herkömmlichen Auswuchtmaschinen entstehen vielfach Zwangskräfte, die das Auswuchtergebnis dadurch verfälschen, daß sie umlauffrequent sind und Wirkungen hervorrufen, die denen von Unwuchten gleichen. Solche Zwangskräfte können verschiedene Ursachen haben und entstehen insbesondere bei Rotoren mit nicht fluchtenden Rotorzapfen, verspannten Rotorlagerungen oder durch Axialschübe. Da der relative Einfluß von derartigen Zwangskräften mit steigender Drehzahl abnimmt, sind die Unwuchtfehler aufgrund von Zwangskräften besonders beim Auswuchten mit niedrigen Drehzahlen sehr groß. Deshalb treten diese Unwuchtfehler besonders stark beim Auswuchten von Großrotoren in Erscheinung, da diese gegenüber ihrer Betriebsdrehzahl meist bei sehr niedriger Meßdrehzahl ausgewuchtet werden.

Aus der ISO-108 ist der theoretische Zusammenhang zwischen der Unwuchtwirkung durch Zwangskraftbeeinflussung in Abhängigkeit der Rotordrehzahl erläutert. Danach wäre eine manuelle Zwangskrafterkennung beim Auswuchten denkbar, bei der für festlegbare Meßdrehzahlen jeweils eine Unwuchtmessung vorgenommen würde. Deren Ergebnisse könnten manuell notiert und durch aufwendige Rechenverfahren die Abhängigkeit der aufgetretenen Unwuchtdifferenzen von den verschiedenen Meßdrehzahlen festgestellt werden. Ergäben diese Berechnungen, daß die Unwuchtdifferenzen quadratisch mit zunehmender Meßdrehzahl abnähmen, so wäre dies ein Indiz für das Vorliegen von Zwangskräften.

Da vielen Bedienern von Auswuchtmaschinen derartige Einflüsse von Zwangskräften häufig nicht bekannt sind, wird es beim Auswuchten meist versäumt, derartige Zwangskräfte festzustellen, was zu einem falschen Unwuchtausgleich führt. Dadurch kommt es dann beim Betrieb des Rotors mit Betriebsdrehzahl zu unangenehmen Schwingungserscheinungen, die auch Schäden an den Lagern und anderen Maschinenteilen verursachen können. Insbesondere ist ein manuelles Verfahren zum Erkennen von Zwangskräften auch sehr zeitraubend und damit kostenintensiv.

Aus dem Federn, Auswuchttechnik, Band 1, Springer Verlag, Berlin, 1977, Seiten 281 und 282 ist die Fehlermöglichkeit beim Auswuchten von Rotoren durch Lagerzwangskräfte beschrieben. Darin ist ein Verfahren genannt, nach dem derartige Zwangskraftbeeinflussungen dadurch vermieden werden können, daß beim Benutzen eines Verbundrahmens dieser genügend steif ausgebildet wird. Allerdings enthält diese Beschreibung keinen Hinweis auf Verfahren, nach denen eine Zwangskraftbeeinflussung beim Auswuchten von Rotoren erkannt werden kann.

Der Erfindung liegt deshalb die Aufgabe zugrunde, ein Verfahren zum Erkennen von Zwangskräften zu schaffen, das den Einfluß von Zwangskräften sicher feststellt und schnell und kostensparend durchführbar ist.

Diese Aufgabe wird durch die im Patentanspruch 1 bzw. 2 angegebenen Erfindungen gelöst. Weiterbildungen und vorteilhafte Ausführungsbeispiele sind in den Unteransprüchen angegeben. Eine entsprechende Einrichtung ist im Anspruch 12 angegeben.

Die Erfindung hat den Vorteil, daß eine Feststellung von Zwangskräften praktisch bei jedem Auswuchtvorgang durchgeführt werden kann. Denn die Messung der Unwuchtwerte kann gleichzeitig mit der Beschleunigung des Rotors auf seine Meßdrehzahl erfolgen. Da nach dem vorliegenden Verfahren die Unwuchtmeßwerte selbsttätig gespeichert werden, kann noch während des Abbremsvorgangs eine Zwangskraftbeeinflussung festgestellt und signalisiert werden.

Eine vorteilhafte Ausgestaltung ermöglicht auch gleichzeitig eine rechnerische Korrektur der gemessenen Unwuchtwerte, so daß keine erneute Unwuchtmessung mehr notwendig ist. Da die entsprechenden Rotoren dann unmittelbar einer Unwuchtkorrektureinrichtung zugeführt werden können und dort mit den korrigierten Werten ausgewuchtet werden, ist diese Ausgestaltung insbesondere bei einer Serienauswuchtung vorteilhaft.

Die Erfindung wird anhand eines Ausführungsbeispiels, das in der Zeichnung dargestellt ist, näher erläutert. Es zeigen:

Fig. 1 ein Blockschaltbild einer Auswuchtmaschine mit Auswerteeinrichtung und Anzeige- und Eingabeeinheit;

Fig. 2 die vektorielle Darstellung des Korrekturvorgangs für die linke Ausgleichsebene und

Fig. 3 die vektorielle Darstellung des Korrekturvorgangs für die rechte Ausgleichsebene

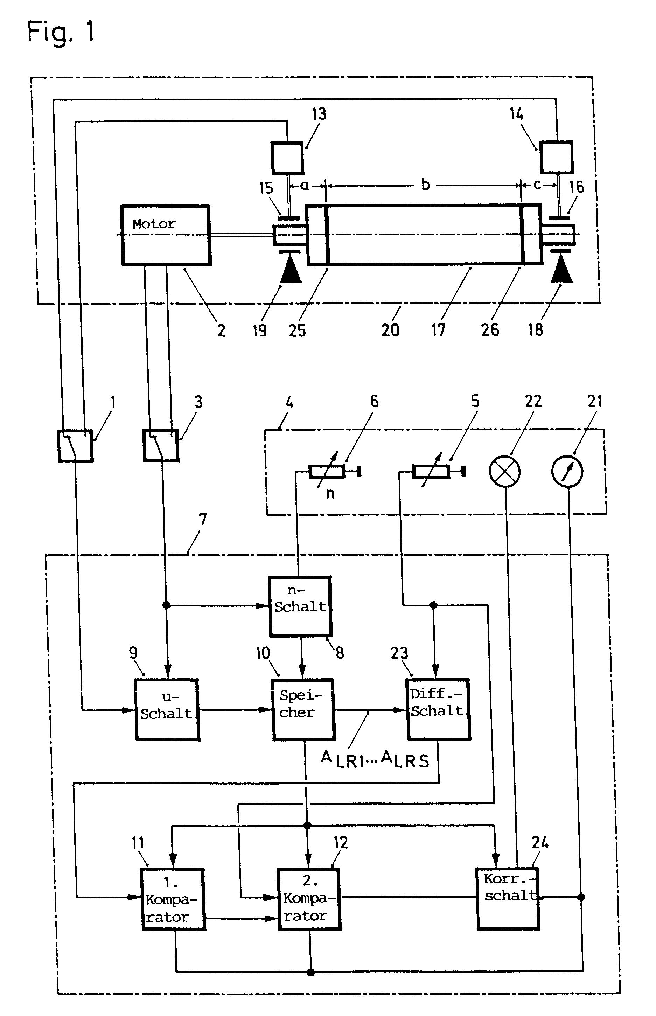

Aus Fig. 1 der Zeichnung ist eine herkömmliche Auswuchtmaschine 20 mit einem auszuwuchtenden Rotor 17 ersichtlich, die mit einer Auswerteeinrichtung 7 verbunden ist, durch die die Zwangskräfte beim Auswuchten erkannt und in einer Anzeige- und Eingabeeinheit 4 signalisiert werden können. Die Auswuchtmaschine 20 besteht im wesentlichen aus zwei Lagerständern 18, 19, die zur Aufnahme des auszuwuchtenden Rotors 17 dienen. An den Lagerständern 18, 19 ist für jede Lagerebene 15, 16 ein Meßaufnehmer 13, 14 angebracht. Beide Meßaufnehmer 13, 14 sind über einen gemeinsamen ersten Kanalumschalter 1 mit einer Unwuchtmeßschaltung 9 in der Auswerteeinrichtung 7 elektrisch verbindbar. Der in der Auswuchtmaschine 20 gelagerte Rotor 17 ist an eine Antriebseinheit 2 gekoppelt, in der auch ein umlaufsynchrones Referenzsignal erzeugt wird. Der Referenzteil der Antriebseinheit 2 ist über einen zweiten Kanalumschalter 3 auch mit der Unwuchtmeßschaltung 9 in der Auswerteeinrichtung 7 verbunden.

Die von den beiden Meßwertgebern 13, 14 gelieferten Meßsignale werden in der Unwuchtmeßschaltung 9 der Auswerteeinrichtung 7 frequenzselektiert und verstärkt. Außerdem werden die Meßsignale in der Unwuchtmeßschaltung 9 doppelt integriert, um eine von der Drehzahl unabhängige Anzeige zu haben, und dann in bekannter Weise mit Hilfe einer Rechenschaltung, in die die Ebenenabstände a, b, c eingegeben werden, auf die Korrekturebenen 25, 26 bezogen. Das umlauffrequente Unwuchtmeßsignal als Ausgangssignal beinhaltet neben den Unwuchtanteilen auch rotorsynchrone Anteile von Zwangskräften.

Die Auswerteeinrichtung 7 enthält auch eine Drehzahlerfassungsschaltung 8, der die Referenzsignale zugeführt werden. Da diese Referenzsignale rotorsynchrone Anteile enthalten, wird durch die Drehzahlerfassungschaltung 8 für vorgegebene Zeitzyklen fortlaufend die jeweilige Rotordrehzahl berechnet. Die Drehzahlerfassungschaltung 8 ist gleichzeitig mit einer Anzeige- und Eingabeeinheit 4 verbunden, durch die der Drehzahlerfassungsschaltung 8 verschiedene Rotordrehzahlen vorgegeben werden können. Dazu ist in der Anzeige- und Eingabeeinheit 4 eine Drehzahleinstellvorrichtung 6 vorgesehen, durch die verschiedene Rotordrehzahlen manuell eingestellt werden können. Die Drehzahlerfassungsschaltung 8 vergleicht die voreingestellten Rotordrehzahlen fortlaufend mit den derzeitigen Rotordrehzahlen und erzeugt bei jeder Übereinstimmung mit den vorgegebenen Drehzahlen ein Erfassungssignal, durch das das zugehörige Unwuchtmeßsignal einem Zwischenspeicher 10 der Auswerteeinrichtung 7 zugeführt wird. Der Zwischenspeicher 10 ist auch mit der Unwuchtmeßschaltung 9 verbunden, die ihm fortlaufend die Ausgangssignale der Unwuchtmeßschaltung 9 liefert. Dadurch werden im Zwischenspeicher 10 für jede eingegebene Rotordrehzahl die jeweiligen Unwuchtmeßwerte $A_{R1}$, $A_{R2}$ und $A_{RS}$ bzw. $A_{L1}$, $A_{L2}$ und $A_{LS}$ gespeichert. Dabei erfaßt der Speicher die Unwuchtmeßwerte getrennt für jede Lagerebene 15, 16. Die Unwuchtmeßwerte mit den Fußnoten R und L geben lediglich Werte für die rechte und linke Korrekturebene wieder, während die Zweitfußnoten sich auf die verschiedenen Drehzahlen beziehen. So gibt die Fußnote S den Bezug zur Solldrehzahl an, während die Fußnoten 1 und 2 jeweils den Bezug zu zwei weiteren niedrigeren Drehzahlen vorgeben.

Die Auswerteeinrichtung 7 ist so ausgelegt, daß die Zwischenspeicherung der Unwuchtmeßsignale bereits während des Beschleunigens des Rotors auf seine Sollmeßdrehzahl vorgenommen wird. Es ist aber auch möglich, daß die vorgegebenen Meßdrehzahlen durch das Bedienpersonal separat angefahren werden. Die vorgegebenen Meßdrehzahlen orientieren sich in jedem Fall an der gewünschten höchsten Auswuchtdrehzahl, die die Solldrehzahl des Rotors beim Auswuchtvorgang darstellt. Die niedrigeren Meßdrehzahlen stehen zur Solldrehzahl in einem bestimmten Verhältnis. Dabei wird für die kleinste Meßdrehzahl eine Drehzahl festgelegt, die vorteilhafterweise 60% der Solldrehzahl beträgt. Hingegen werden für eventuell weitere Drehzahlen Werte vorgegeben, die zwischen der niedrigsten und der höchsten Drehzahl liegen. Dabei hat sich bei einem Verfahren mit Unwuchtmeßwerten bei drei verschiedenen Drehzahlen als vorteilhaft erwiesen, die Unwuchtmeßwerte bei Solldrehzahl, bei 80 % der Solldrehzahl und bei 60 % der Solldrehzahl zu erfassen.

Für das erfindungsgemäße Verfahren ist es allerdings nicht unbedingt erforderlich, die Unwuchtmeßwerte bei einem bestimmten Drehzahlverhältnis bezogen auf die Solldrehzahl zu erfassen. Grundsätzlich können die Unwuchtmeßwerte bei beliebigen Meßdrehzahlen ermittelt werden, wobei es vorteilhaft ist, die Differenz der Drehzahlen möglichst groß zu machen.

Die vom Zwischenspeicher 10 gespeicherten Unwuchtmeßwerte für jeweils jede Korrekturebene 25, 26 stehen nun über Verbindungsleitungen einer ersten Rechenschaltung 23 zur Verfügung. Die erste Rechenschaltung 23 bildet nun aus den Unwuchtmeßwerten für jede Korrekturebene 25, 26 und damit für jeden Kanal jeweils die vektorielle Differenz aus den Meßwerten der niedrigsten zur nächst höheren Drehzahl bis zur Solldrehzahl. Die erste Rechenschaltung 23 erzeugt damit für jede Korrekturebene 25, 26 jeweils vektorielle Meßwertdifferenzen. Die Größe dieser Differenzen sind abhängig von der Größe der Zwangskraft, dem Drehzahlverhältnis zwischen kleinster und größter Meßdrehzahl und der größten Meßdrehzahl selbst. Daher wird bereits an dieser Stelle ein Vergleich von Meßwertdifferenz und Toleranz durchgeführt, mit dem Ziel, nur ab bestimmten Meßwertdifferenzen alle weiter beschriebenen Überprüfungen stattfinden zu lassen. Zu diesem Zweck ist die Recheneinheit 23 auch mit einem Einstellglied 5 in der Anzeige- und Eingabeeinheit 4 verbunden, durch das manuell ein Unwuchttoleranzbereich vorgegeben wird. Der Unwuchttoleranzbereich könnte auch fest eingestellt oder von einem Datenträger abrufbar sein.

In der Rechenschaltung 23 werden deshalb alle Meßwertdifferenzen jeder Korrekturebene 25, 26 mit den vorgegebenen Toleranzwerten verglichen. Bleibt dabei die Meßwertdifferenz bezüglich der beiden höchsten Meßdrehzahlen innerhalb eines Anteils des vorgegebenen Toleranzbereiches, so wird der Unwuchtmeßwert bei Solldrehzahl in gewohnter Weise zur Anzeige gebracht. Hierbei wird der für diesen Vergleich vorgegebene Toleranzbereich um einen bestimmten Wert kleiner als der zulässige Endtoleranzbereich, z. B. nach ISO 1940 gewählt, um auch die restlichen Meßungenauigkeiten zu berücksichtigen. Dazu wird in der ersten Rechenschaltung 23 ein Signal erzeugt, durch den der Unwuchtmeßwert bei Solldrehzahl aus dem Zwischenspeicher 10 zu einem Anzeigegerät 21 in der Eingabe- und Anzeigeeinheit 4 durchgeschaltet wird.

Ergibt hingegen der Vergleich in der ersten Rechenschaltung 23 eine Abweichung, die über diesen vorgegebenen Toleranzbereich hinausgeht, so werden alle Meßwertdifferenzen einer zweiten Rechenschaltung 11 zugeführt. Außerdem ist diese zweite Rechenschaltung 11 noch mit dem Zwischenspeicher 10 verbunden, so daß der zweiten Rechenschaltung 11 die Werte der Meßdrehzahlen als auch die einzelnen Unwuchtmeßwerte jeder Korrekturebene 25, 26 zur Verfügung stehen. In der zweiten Rechenschaltung 11 wird für mindestens zwei vektorielle Meßwertdifferenzen folgende Vergleichsberechnung nach den Formeln:

$$\frac{\delta_{L12}}{\delta_{LS2}} = \frac{(n_2/n_1)^2 - 1}{1 - (n_2/n_s)^2}$$

$$\frac{\delta_{R12}}{\delta_{RS2}} = \frac{(n_2/n_1)^2 - 1}{1 - (n_2/n_s)^2}$$

durchgeführt.

Es bedeuten:

$\delta_{L12}$: Meßwertdifferenz der linken Korrekturebene 25 für die niedrigste und mittlere Drehzahl.

$\delta_{LS2}$: Meßwertdifferenz der linken Korrekturebene 25 für die mittlere und höchste Drehzahl.

$\delta_{R12}$: Meßwertdifferenz der rechten Korrekturebene 26 für die niedrigste und mittlere Drehzahl.

$\delta_{RS2}$: Meßwertdifferenz der rechten Korrekturebene 26 für die mittlere und höchste Drehzahl.

$n_1$: niedrigste Drehzahl ($0{,}6 \cdot n_S$)

$n_2$: mittlere Drehzahl ($0{,}8 \cdot n_S$)

$n_S$: höchste Drehzahl, die der Solldrehzahl entspricht.

Ergibt die vorgenannte Vergleichsrechnung, daß die Quotienten der beiden Meßwertdifferenzen nicht mit dem Zahlenwert der rechten Gleichungsseite übereinstimmen, so liegt kein Einfluß einer Zwangskraft vor. In der zweiten Rechenschaltung 11 wird dann ein Anzeigesignal erzeugt, so daß der Unwuchtmeßwert bei Solldrehzahl zum Anzeigegerät 21 durchgeschaltet wird.

Stimmen hingegen die Quotienten der beiden Meßwertdifferenzen mit dem Zahlenwert der rechten Gleichungsseite weitgehend überein, so ergibt dies die Feststellung, daß die Meßwertdifferenzen quadratisch mit zunehmender Drehzahl abnehmen. Da dies ein Hinweis auf das Vorliegen einer Zwangskraftbeeinflussung darstellt, wird in der zweiten Rechenschaltung 11 nachfolgend eine Winkelvergleichsrechnung durchgeführt.

Eine Zwangskraftbeeinflussung liegt immer dann sicher vor, wenn zusätzlich noch die Unwuchtdifferenzen einer Korrekturebene in die gleiche Richtung wirken. Da die Unwuchtdifferenzen vektormäßig betrachtet werden können, müssen die Winkel der einzelnen Unwuchtdifferenzvektoren einer Korrekturebene gleich sein. Die Rechenschaltung 11 ermittelt deshalb bei zwei Unwuchtdifferenzen jeweils den Winkel jeder Differenz und vergleicht diese miteinander. Diese Vergleichsrechnerschaltung wird jeweils für jede Korrekturebene getrennt durchgeführt. Sind dabei die Winkellagen der Differenzunwuchten für eine Korrekturebene weitgehend identisch und trifft dies gleichzeitig auch für die andere Korrekturebene zu, so liegt eine Zwangskraftbeeinflussung vor.

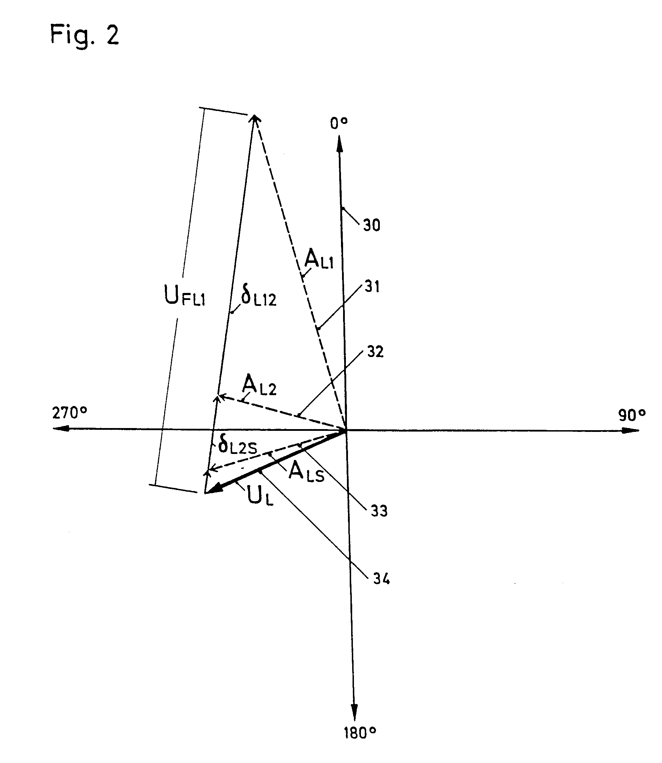

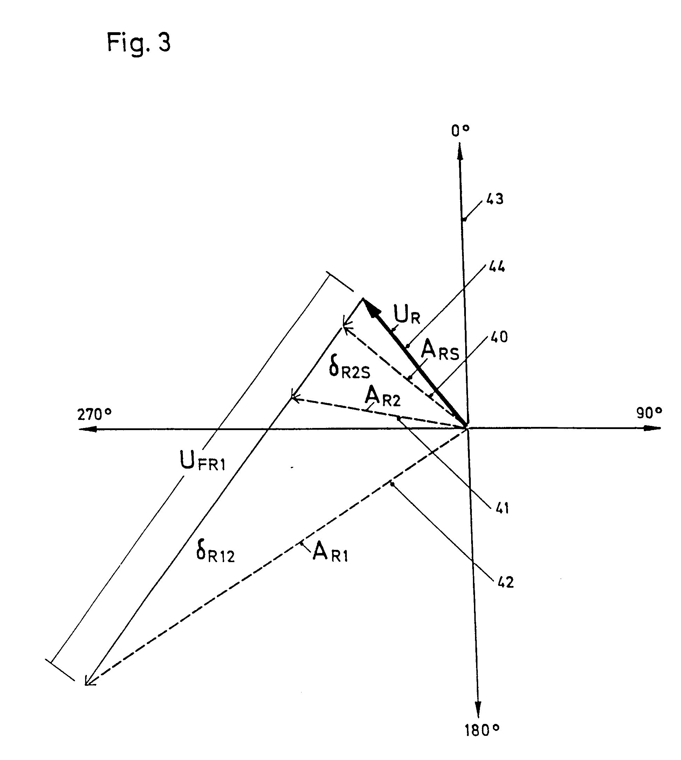

Eine derartige übereinstimmende Winkellage der Unwuchtdifferenzen ist auch aus der Fig. 2 und 3 der Zeichnung ersichtlich. Dort sind die Unwuchtmeßwerte und Unwuchtdifferenzen vektormäßig in einem Koordinatensystem dargestellt. Dabei wirken die Unwuchtdifferenzen in der gleichen Richtung und damit ist auch die Winkellage der beiden Unwuchtdifferenzwinkel gleich, wenn die Unwuchtdifferenzvektoren $\delta_{R12}$ und $\delta_{R2S}$ bzw. $\delta_{L12}$ und $\delta_{L2S}$ jeweils auf einer Geraden liegen.

Soweit keine weitgehende Winkelübereinstimmung vorliegt und damit auch keine Zwangskraftbeeinflussung, wird der Unwuchtmeßwert bei Solldrehzahl zum Anzeigegerät 21 durchgeschaltet und dort zur Anzeige gebracht. Stimmen hingegen die Winkellagen der Unwuchtdifferenzen einer Korrekturebene überein und dies bei beiden Korrekturebenen, so liegt eine Zwangskraftbeeinflussung vor, so daß die zweite Rechenschaltung 11 dann ein Erkennungssignal erzeugt.

Das Erkennungssignal kann sowohl zur Signalisierung der Zwangskraftbeinflussung als auch zur Veranlassung einer Korrekturrechnung erfolgen. Eine derartige Signalisierung kann sowohl akustisch als auch visuell erfolgen. Dies würde dann einen Bediener veranlassen, eine Korrektur des Unwuchtmeßwertes vorzunehmen.

In der vorbeschriebenen Ausführungsform wird das Erkennungsignal allerdings ohne gleichzeitige Signalisierung einer Vergleichsrechnerschaltung 12 zugeführt. Dieser Vergleichsrechnerschaltung 12 stehen auch die Drehzahlund Unwuchtmeßwerte aus dem Zwischenspeicher 10 zur Verfügung. Daraus ermittelt die Vergleichsrechnerschaltung 12 den jeweils auf eine bestimmte Meßdrehzahl bezogenen Anzeigefehler $U_{FL}$ für die linke und $U_{FR}$ für die rechte Korrekturebene. Für die kleinste Meßdrehzahl $n_1$ ergeben sich folgende Beziehungen:

$$U_{FL1} = \frac{\delta_{L1S}}{1 - (\omega_1/\omega_S)^2}$$

$$U_{FR1} = \frac{\delta_{R1S}}{1 - (\omega_1/\omega_S)^2}$$

Es bedeuten:
$U_{FL1}$ bzw. $U_{FR1}$:
Anzeigefehler für die linke bzw. rechte Korrekturebene bei Meßdrehzahl $n_1$
$\omega_1$ bzw. $\omega_S$:
Winkelgeschwindigkeit bei $n_1$ bzw. $n_S$
$\delta_{L1S}$ bzw. $\delta_{R1S}$:
Vektorielle Meßwertdifferenz in der linken bzw. rechten Korrekturebene bezogen auf die kleinste Drehzahl $n_1$ und die höchste Drehzahl (Solldrehzahl) $n_S$.

Die Vergleichsrechnerschaltung 12 ist auch mit einem Einstellglied 5 in der Anzeige- und Eingabeeinheit 4 verbunden, durch das manuell ein Unwuchttoleranzbereich vorgegeben wird. Der Unwuchttoleranzbereich könnte auch fest eingestellt oder von einem Datenträger abrufbar sein. In der Vergleichsrechnerschaltung 12 wird nun der Toleranzbereich mit dem durch die Zwangskraft verursachten Fehlern $U_{FL1}$ und $U_{FR1}$ verglichen. Sind dabei die Fehler kleiner als ein bestimmter Anteil (z. B. 10 %) der zulässigen Unwuchttoleranz, so erfolgt eine Unwuchtmeßwertanzeige entsprechend des gemessenen Unwuchtmeßwertes bei Solldrehzahl $A_{LS}$ bzw. $A_{RS}$ in dem Anzeigegerät 21 der Anzeige- und Eingabeeinheit 4. In einem solchen Fall ist eine Korrektur des mit einer Zwangskraft behafteten Unwuchtmeßwertes entbehrlich, weil sich der Fehleranteil, der durch die Zwangskraft verursacht wird, in jedem Fall noch im zulässigen Toleranzbereich bewegt und deshalb vernachlässigt werden kann.

Überschreitet hingegen der Zwangskraftfehler den festgelegten Unwuchttoleranzanteil, so liegt eine zu berücksichtigende Zwangskraftbeeinflussung vor. Diese könnte dann sowohl akustisch als auch visuell signalisiert werden. Der Bediener einer Auswuchtmaschine würde dadurch veranlaßt, eine Korrektur des fehlerbehafteten Unwuchtmeßwertes vorzunehmen.

Bei der vorliegenden Ausführungsform wird hingegen bei Überschreitung des zulässigen Toleranzbereichs ein Korrektursignal erzeugt, ohne daß dem Bediener die Zwangskraftbeeinflussung zusätzlich angezeigt wird. Dabei stellt das Korrektursignal einen Wert dar, der dem durch die Zwangskraft verursachten Unwuchtmeßwerten $A_{LS}$ bzw. $A_{RS}$ bei Solldrehzahl entspricht. Aus den ermittelten Korrektursignalen werden in einer nachfolgenden Korrekturrechnerschaltung 24 in weiteren Rechenvorgängen anhand der nachfolgenden Formeln die korrigierten Unwuchtwerte $U_L$ bzw. $U_R$ vektoriell berechnet:

$$U_L = A_{L1} - U_{FL1}$$
$$U_R = A_{R1} - U_{FR1}$$

Dabei stehen der Korrekturrechnerschaltung 12, die in der Vergleichsrechnerschaltung 11 ermittelten Anzeigefehlerwerte $U_{FL1}$ und $U_{FR1}$ und die im Zwischenspeicher 10 gespeicherten Unwuchtmeßwerte $A_{L1}$ und $A_{R1}$ bei Drehzahl $n_1$ zur Verfügung.

Die vektorielle Darstellung des Korrekturvorgangs ist auch aus Fig. 2 und Fig. 3 ersichtlich. Dabei stellt Fig. 2 die Unwuchtkorrektur bezüglich der Zwangskraft für die linke Korrekturebene 25 dar, während Fig. 3 die Korrektur für die rechte Korrekturebene 26 wiedergibt. Die vektorielle Korrektur der Unwuchtmeßergebnisse 31, 32, 33, 40, 41, 42 ist dabei in einem Koordinatensystem 30, 43 eingetragen, bei dem die Vektoren 34, 44, $U_L$ und $U_R$ die korrigierten Unwuchtmeßergebnisse für die entsprechenden Korrekturebenen 25, 26 darstellen. Die Unwuchtmeßergebnisse 31, 32, 33; 40, 41 42 sind hingegen mit den Buchstaben A gekennzeichnet, bei denen die Zusätze die zugeordnete Korrekturlagerebene und Meßdrehzahl angeben. Der Maßstab und die Größe der entsprechenden Vektoren wurde willkürlich gewählt und sind nur beispielhaft.

Die von der Korrekturschaltung 24 errechneten Unwuchtwerte $U_L$ und $U_R$ werden zusätzlich noch einer Meßfehlerkontrolle unterzogen. Dabei werden die durch Zwangskraft verursachten Anzeigefehler $U_{FL1}$ bzw. $U_{FR1}$ bei Drehzahl $n_1$ in Beziehung zu den ermittelten Unwuchten $U_L$ bzw. $U_R$ gesetzt. Hierbei werden nur die gerechneten Unwuchten $U_L$ bzw. $U_R$ in dem Anzeigegerät 21 angezeigt, wenn sie größer als ein bestimmter Anteil (z. B. 10 %) der jeweiligen Anzeigefehler $U_{FL1}$ bzw. $U_{FR1}$ sind. Damit wird vermieden, daß durch unvermeidbare Meßfehler in den Meßwerten $A_{L1}$, $A_{L2}$, $A_{LS}$ bzw. $A_{R1}$, $A_{R2}$, $A_{RS}$ auch die hieraus gerechneten Unwuchten $U_L$ bzw. $U_R$ ihrerseits mit zu hohen Fehlern behaftet sind.

Die so ermittelten korrigierten Unwuchtmeßwerte 34, 44 werden nachfolgend in dem Anzeigegerät 21 wiedergegeben. Gleichzeitig erfolgt bei der Anzeige der korrigierten Unwuchtmeßwerte 34, 44 eine zusätzliche Signalisierung in einer Signalvorrichtung 22, die erkennen läßt, daß es sich um einen korrigierten Meßwert handelt.

Bei kleinen Auswuchtdrehzahlen von z. B. unter 200 U/min kommt es praktisch nur zu nennenswerten Meßfehlern, die von einer Zwangskraftbeeinflussung herrühren. Deshalb kann bei einer weiteren Ausführungsart eine Zwangskraftbeeinflussung bereits unter Zugrundelegung von zwei Unwuchtmeßwerten mit hinreichender Genauigkeit ermittelt werden. Voraussetzung ist jedoch, daß die Unwuchtmeßwerte bei kleinen Meßdrehzahlen von z. B. unter 200 U/min erfaßt werden. Dazu ist die Auswerteeinrichtung 7 so ausgebildet, daß die Drehzahlerfassungsschaltung 8 pro Ausgleichsebene lediglich zwei Unwuchtmeßwerte erfaßt und im Zwischenspeicher 10 speichert. Daraus wird in der ersten Rechenschaltung 23 für jede Ausgleichsebene jeweils ein Differenzwert errechnet. Die Unwuchtdifferenzwerte jeder Korrekturebene werden mit einem vorgegebenen Toleranzwert verglichen, der einen bestimmten Anteil der zulässigen Endtoleranz darstellt.

Übersteigt der jeweilige Unwuchtdifferenzwert den vorgegebenen Toleranzwert, so liegt eine nennenswerte Meßwertänderung vor, die bei kleinen Meßdrehzahlen praktisch immer von einer Zwangskraftbeeinflussung herrührt. Die Auswerteeinrichtung 7 ist deshalb so ausgebildet, daß beim Auswuchten mit kleinen Meßdrehzahlen bereits dann eine Zwangskraftbeeinflussung festgestellt wird, wenn eine nennenswerte Meßwertänderung für jede Korrekturebene ermittelt wird. Bei einer nennenswerten Meßwertänderung bildet die zweite Rechenschaltung 11 gleichfalls ein Erkennungssignal, das der nachfolgenden Vergleichsrechnerschaltung 12 zugeführt und dort, wie bereits im vorstehenden Ausführungsbeispiel beschrieben, weiterverarbeitet wird. Aus der ermittelten Unwuchtdifferenz und den zugehörigen beiden Meßdrehzahlen pro Ausgleichsebene sind dann in der Ausgleichsrechnerschaltung 12 die Anzeigefehler $U_{FL}$ als auch in der Korrekturrechnerschaltung 24 die korrigierten Unwuchtwerte $U$ zu errechnen.

Zweckmäßigerweise könnte ein Zwangskraftausgleich auch mit einem Verfahren mit mehr als nur zwei oder drei verschiedenen Meßwerten durchgeführt werden. Durch eine Erhöhung der Anzahl der Meßwerte würde sich die Genauigkeit des Verfahrens erhöhen lassen. Eine derartige Ausgestaltung ist aber nur sinnvoll, wenn dieses Verfahren auch in der zur Verfügung stehenden Zeit durchführbar ist, ohne den apparativen Aufwand merklich zu erhöhen.

Das vorbeschriebene Ausführungsbeispiel einer Zwangskraftkorrektur kann auch so ausgestaltet sein, daß eine feste Solldrehzahl voreingestellt ist oder diese auch vom Bediener eingestellt wird. Daraus könnten in der Drehzahlerfassungsschaltung niedrigere Meßdrehzahlen errechnet und bei diesen gemessen und ausgewertet werden.

Vorteilhaft wäre auch ein Verfahren, bei dem mit der Festlegung der Nenndrehzahl die Antriebseinrichtung der Auswuchtmaschine so gesteuert würde, daß selbsttätig niedrigere Drehzahlen für einen bestimmten Zeitraum angefahren würden und jeweils dann eine entsprechende Unwuchtmessung durchgeführt wird. Hierdurch wäre eine höhere Genauigkeit erzielbar, als wenn während der Beschleunigungsphase gemessen wird.

## Patentansprüche

1. Verfahren zum selbsttätigen Erkennen von Zwangskräften bei auszuwuchtenden Rotoren (17), bei denen Unwuchtmeßwerte für verschiedene Meßdrehzahlen pro Korrekturebene (25, 26) ermittelt werden, dadurch gekennzeichnet, daß in einer Auswerteeinrichtung (7) aus mindestens drei Unwuchtmeßwerten (31, 32, 33; 40, 41, 42) mindestens zwei Differenzwerte der drehzahlmäßig benachbarten Unwuchtmeßwerte pro Korrekturebene (25, 26) gebildet werden und dann eine Zwangskraft festgestellt wird, wenn die beiden Differenzwerte bei den höheren Drehzahlen kleiner sind als bei den beiden niedrigeren Drehzahlen und die Abnahme einem quadratischen Verlauf folgt.

2. Verfahren zum selbsttätigen Erkennen von Zwangskräften bei auszuwuchtenden Rotoren (17), bei denen Unwuchtmeßwerte für mindestens zwei sehr kleine Meßdrehzahlen im Verhältnis zur Betriebsdrehzahl pro Korrekturebene (25, 26) ermittelt werden, dadurch gekennzeichnet, daß in einer Auswerteeinrichtung (7) aus den Unwuchtmeßwerten (31, 33; 40, 42) mindestens ein Differenzwert pro Korrekturebene (25, 26) gebildet wird, und dann eine Zwangskraft festgestellt wird, wenn eine nennenswerte Änderung der Unwuchtmeßwerte festgestellt wird.

3. Verfahren zum selbsttätigen Erkennen von Zwangskräften nach Anspruch 1, dadurch gekennzeichnet, daß die Auswerteeinrichtung (7) aus den Unwuchtmeßwerten eine Zwangskraftbeeinflussung ermittelt, wenn die Winkellage der Meßwertdifferenzen jeder Ausgleichsebene weitgehend gleich ist.

4. Verfahren zum selbsttätigen Erkennen von Zwangskräften nach einem der vorhergehenden Ansprüche, dadurch gekennzeichnet, daß die Unwuchtmeßwerte (31, 32, 33; 40, 41, 42) bei Drehzahlen ermittelt werden, die in einem bestimmten Verhältnis zur Solldrehzahl stehen, wobei die niedrigste Drehzahl 60 % und die höchste 100 % der Solldrehzahl betragen.

5. Verfahren zum selbsttätigen Erkennen von Zwangskräften nach einem der vorhergehenden Ansprüche, dadurch gekennzeichnet, daß der Differenzwert aus dem Unwuchtmeßwert bei der höchsten Drehzahl und einer niedrigeren Drehzahl einem Toleranzvergleich unterzogen wird, in dem nur dann eine Zwangskraftbeeinflussung festgestellt wird, wenn der Differenzwert einen bestimmten Bereich des zulässigen Toleranzbereiches übersteigt.

6. Verfahren zum selbsttätigen Erkennen von Zwangskräften nach einem der vorhergehenden Ansprüche, dadurch gekennzeichnet, daß bei Feststellung einer Zwangskraft dies in einer Signalvorrichtung (22) akustisch oder visuell signalisiert wird.

7. Verfahren zum selbsttätigen Erkennen von Zwangskräften nach Anspruch 5, dadurch gekennzeichnet, daß aus den ermittelten Unwuchtmeßwerten der bei Solldrehzahl erfaßte Wert in einem Anzeigegerät (21) angezeigt wird.

8. Verfahren zum selbsttätigen Erkennen von Zwangskräften nach einem der vorhergehenden Ansprüche, dadurch gekennzeichnet, daß bei Feststellung einer Zwangskraft aus den ermittelten Unwuchtmeßwerten durch ein Rechenverfahren die korrigierten Unwuchtwerte (34, 44) ermittelt und im Anzeigegerät (21) angezeigt werden.

9. Verfahren zum selbsttätigen Erkennen von Zwangskräften nach einem der vorhergehenden Ansprüche, dadurch gekennzeichnet, daß bei Feststellung einer Zwangskraft ein Toleranzvergleich durchgeführt wird, wobei nur dann eine Korrektur der zwangskraftbehafteten Unwuchtmeßwerte erfolgt, wenn der Anteil des durch die Zwangskraft hervorgerufenen Fehlers einen bestimmten Anteil der zulässigen Unwuchttoleranz überschreitet.

10. Verfahren zum selbsttätigen Erkennen von Zwangskräften nach einem der vorhergehenden Ansprüche, dadurch gekennzeichnet, daß bei Feststellung einer Zwangskraft zusätzlich eine Meßfehlerkontrolle durchgeführt wird, bei der die durch Zwangskraft verursachten Anzeigefehler mit den ermittelten Unwuchten (34, 44) in Beziehung gesetzt und nur dann eine endgültige Korrektur des zwangskraftbehafteten Unwuchtmeßwertes durchgeführt wird, wenn die ermittelten Unwuchtmeßwerte (34, 44) größer sind als ein bestimmter Anteil der jeweiligen Anzeigefehler.

11. Verfahren zum selbsttätigen Erkennen von Zwangskräften nach einem der vorhergehenden Ansprüche, dadurch gekennzeichnet, daß die Unwuchtmeßwerte während der Rotorbeschleunigungsphase erfaßt und gleichzeitig der Berechnungsvorgang zur Ermittlung der Zwangskraftbeeinflussung durchgeführt wird.

12. Einrichtung zur Durchführung des Verfahren nach den Ansprüchen 1 bis 11, gekennzeichnet durch folgende Merkmale:
    a) es ist eine Auswuchteinrichtung (20) vorgesehen, die mit je einem Meßwertgeber (13, 14) je Lagerebene (15, 16) ausgestattet ist und einen rotorsynchronen Referenzsignalgeber enthält;
    b) die Einrichtung enthält eine Eingabe- und Anzeigeeinheit (4), die über eine Drehzahleinstellvorrichtung (6), ein Einstellglied (5) zur Toleranzvorgabe, eine Signalvorrichtung (22) und ein Anzeigegerät (21) verfügt, die mit der Auswerteeinrichtung (7) verbunden sind;
    c) daß eine Auswertevorrichtung (7) vorgesehen ist, die elektronische Schaltungen enthält, die während oder nach dem Unwuchtmeßvorgang einen oder mehrere Rechenschritte nach einem der Verfahren nach den Ansprüchen 1 bis 11 durchführt und Ausgangssignale erzeugt, durch die das Anzeigegerät (21) und/oder die Signalvorrichtung (22) in der Eingabe- und Anzeigeeinheit (4) ansteuerbar ist.

## Claims

1. A method of automatically recognising constraining forces in rotors (17) requiring balancing, in which unbalance readings are taken for different measuring speeds per correction plane (25, 26), characterised in that at least two differential values of unbalance readings at consecutive speeds are formed per correction plane (25, 26) from at least three unbalance readings (31, 32, 33; 40, 41, 42) in an evaluator (7), and a constraining force is determined when the two differential values are smaller at the higher speeds than at the two lower speeds and the reduction follows a quadratic pattern.

2. A method of automatically recognising constraining forces in rotors (17) requiring balancing, in which unbalance readings are taken per correction plane (25, 26) for at least two very low measuring speeds relative to the operating speed, characterised in that at least one differential value per correction plane (25, 26) is formed from the unbalance readings (31, 33; 40, 42) in an evaluator (7), and a constraining force is determined when an appreciable change in the unbalance readings is determined.

3. A method of automatically recognising constraining forces according to claim 1, characterised in that the evaluator (7) determines an effect of a constraining force from the unbalance readings if the angular position of the differences in readings is substantially the same in each compensation plane.

4. A method of automatically recognising constraining forces according to any of the preceding claims, characterised in that the unbalance readings (31, 32, 33; 40, 41, 42) are taken at speeds which have a certain relationship to the required speed, the lowest speed being 60% of the required speed and the highest 100%.

5. A method of automatically recognising constraining forces according to any of the preceding claims, characterised in that the value of the difference between the unbalance reading at the highest speed and at a lower speed is subjected to a tolerance comparison, in which the effect of a constraining force is determined only when the differential value exceeds a certain range of the permissible tolerance range.

6. A method of automatically recognising constraining forces according to any of the preceding claims, characterised in that when a constraining force is determined it is signalled audibly or visually in a signalling device (22).

7. A method of automatically recognising constraining forces according to claim 5, characterised in that the value recorded at the required speed from the unbalance readings taken is displayed in a display device (21).

8. A method of automatically recognising constraining forces according to any of the preceding claims, characterised in that when a constraining force is determined by a computing process from the unbalance readings taken, the corrected unbalance values (34, 44) are ascertained and displayed in the display device (21).

9. A method of automatically recognising constraining forces according to any of the preceding claims, characterised in that when a constraining force is determined a tolerance comparison is carried out, and the unbalance readings entailing the constraining force are corrected only when the proportion of the error caused by the constraining force exceeds a certain proportion of the permissible unbalance tolerance.

10. A method of automatically recognising constraining forces according to any of the preceding claims, characterised in that when a constraining force is determined a check is also made for measuring errors, in which display errors caused by the constraining force are related to the unbalances (34, 44) found, and the unbalance reading entailing a constraining force is definitively corrected only when the unbalance readings (34, 44) taken are greater than a certain proportion of the particular display errors.

11. A method of automatically recognising constraining forces according to any of the preceding claims, characterised in that the unbalance readings are recorded during the rotor acceleration phase, and the calculating process to determine the effect of constraining forces is carried out simultaneously.

12. Apparatus for carrying out the method of claims 1 to 11, characterised by the following features:
    a) a balancing apparatus (20) is provided, equipped with one measurement emitter (13, 14) per bearing plane (15, 16) and containing a reference signal emitter synchronous with the rotor;
    b) the apparatus contains an input and display unit (4) provided with a speed setting apparatus (6), a setting member (5) to specify the tolerance, a signalling device (22) and a display device (21) which are connected to the evaluator (7);

c) that an evaluator (7) is provided, which contains electronic circuits, which carries out one or more computing steps according to any of the methods of claims 1 to 11 during or after the unbalance measuring process, and which generates output signals whereby the display device (21) and/or the signalling device (22) in the input and display unit (4) may be actuated.

## Revendications

1. Procédé de reconnaissance automatique des contraintes de rotors (17) à équilibrer, pour lesquels des valeurs de balourd sont déterminées à différentes vitesses de rotation mesurées par plan de correction (25, 26), caractérisé en ce que dans un dispositif d'exploitation il est formé, à partir d'au moins trois valeurs mesurées du balourd (31, 32, 33 ; 40, 41, 43), au moins deux valeurs différentielles des valeurs mesurées du balourd voisines en ce qui concerne la vitesse de rotation, par plan de correction (25, 26) et une contrainte est constatée lorsque les deux valeurs différentielles sont plus petites pour les vitesses de rotation supérieures que pour les vitesses de rotation inférieures et la diminution suit une courbe quadrique.

2. Procédé de reconnaissance automatique des contraintes de rotors (17) à équilibrer, pour lesquels des valeurs de balourd sont déterminées à différentes vitesses de rotation mesurées par plan de correction (25, 26), caractérisé en ce que dans un dispositif d'exploitation (7) il est formé à partir des valeurs mesurées du balourd (31, 33 ; 40, 42) au moins une valeur différentielle par plan de correction (25, 26), et une contrainte est ensuite constatée si une variation notable des valeurs mesurées du balourd est constatée.

3. Procédé de reconnaissance automatique des contraintes selon la revendication 1, caractérisé en ce que le dispositif d'exploitation (7) détermine à partir des valeurs mesurées du balourd l'influence de contraintes lorsque la position angulaire des valeurs mesurées différentielles de chaque plan d'équilibrage est pratiquement la même.

4. Procédé de reconnaissance automatique des contraintes selon l'une des revendications précédentes, caractérisé en ce que les valeurs mesurées du balourd (31, 32, 33 ; 40, 41, 42) sont déterminées à des vitesses de rotation qui sont dans un rapport déterminé avec la vitesse de rotation de consigne la vitesse de rotation la plus basse représentant 60 % et la plus haute 100 % de la vitesse de rotation de consigne.

5. Procédé de reconnaissance automatique des contraintes sel on l'une des revendication précédentes, caractérisé en ce que la valeur différentielle résultant de la valeur mesurée du balourd à la vitesse de rotation maximale et à une vitesse de rotation plus basse, est soumise à une comparaison de tolérance dans laquelle il est constaté l'influence de contraintes uniquement lorsque la valeur différentielle dépasse un domaine déterminé du domaine de tolérances admissible.

6. Procédé de reconnaissance automatique des contraintes selon l'une des revendications précéndentes, caractérisé en ce que dans le cas où une contrainte est constatée ceci est signalé acoustiquement ou visuellement dans un dispositif de signalisation (22).

7. Procédé de reconnaissance automatique des contraintes selon la revendication 5, caractérisé en ce qu'à partir des valeurs mesurées du balourd obtenues, la valeur enregistrée à la vitesse de rotation de consigne est affichée dans un appareil d'affichage 21.

8. Procédé de reconnaissance automatique des contraintes sel on l'une des revendications précédentes, caractérisé en ce que dans le cas où est constatée une contrainte, à partir des valeurs mesurées du balourd obtenues, les valeurs du balourd corrigées (34, 44) sont déterminées par calcul et affichées dans l'appareil d'affichage (21).

9. Procédé de reconnaissance automatique des contraintes selon l'une des revendications précédentes, caractérisé en ce que dans le cas où est constatée une contrainte il est procédé à une comparaison des tolérances, une correction des valeurs mesurées du balourd, liées à la contrainte, n'étant effectuée que si le pourcentage de défauts provoqués par la contrainte dépasse un pourcentage déterminé de la tolérance de balourd admissible.

10. Procédé de reconnaissance automatique des contraintes selon l'une des revendications précédentes, caractérisé en ce que dans le cas où est constatée une contrainte il est procédé en supplément à un contrôle des erreurs de mesure, au cours duquel les erreurs d'affichage provoquées par la contrainte sont mises en relation avec les balourds (34, 44) déterminés et une correction définitive de la valeur mesurée du balourd, liée à la contrainte, n'est exécutée que si les valeurs mesurées du balourd (34, 44) obtenues sont supérieures à un pourcentage déterminé d'erreurs d'affichage respectives.

11. Procédé de reconnaissance automatique des contraintes selon l'une des revendications précédentes, caractérisé en ce que les valeurs mesurées du balourd sont détectées pendant la phase d'accélération du rotor et en même temps l'opération de calcul destinée à déterminer l'influence de la contrainte est exécutée.

12. Dispositif pour la mise en oeuvre du procédé selon les revendications 1 à 11, caractérisé par les caractéristiques suivantes :

a) il est prévu un dispositif d'équilibrage (20), qui est équipé d'un capteur de valeurs mesurées (13, 14) par plan d'appui (15, 16) et qui contient un capteur de signaux de référence synchronisé avec le rotor ;

b) le dispositif comporte une unité de saisie et d'affichage (4), qui dispose d'un dispositif de réglage de vitesse de rotation (6), d'un organe de réglage (5) pour la sélection de la tolérance, d'un dispositif de signalisation (22) et d'un appareil d'affichage (21), qui sont reliés avec le dispositif d'exploitation (7) ;

c) il est prévu un dispositif d'exploitation (7), qui contient des circuits électroniques, qui pendant ou après la mesure du balourd exécute un ou plusieurs pas de calcul d'après l'un des procédés suivant les revendications 1 à 11 et qui produit des signaux de sortie, par lesquels l'appareil d'affichage (21) et/ou le dispositif de signalisation (22) peut être commandé dans l'unité de saisie et d'affichage (4).

# Fig. 1

Fig. 2

# Fig. 3